(19) Europäisches Patentamt
European Patent Office
Office européen des brevets

(11) Veröffentlichungsnummer : **0 038 300**
**B1**

# (12) EUROPÄISCHE PATENTSCHRIFT

(45) Veröffentlichungstag der Patentschrift : **22.01.86**

(51) Int. Cl.⁴ : **C 08 F220/40**, C 08 F246/00

(21) Anmeldenummer : **81810134.7**

(22) Anmeldetag : **06.04.81**

## (54) Polymerisierbare Zusammensetzung und (Meth)acrylsäureester.

(30) Priorität : **11.04.80 CH 2787/80**

(43) Veröffentlichungstag der Anmeldung : **21.10.81 Patentblatt 81/42**

(45) Bekanntmachung des Hinweises auf die Patenterteilung : **22.01.86 Patentblatt 86/04**

(84) Benannte Vertragsstaaten : **CH DE FR GB IT LI NL**

(56) Entgegenhaltungen :
**SU-A- 172 312**
**US-A- 3 629 197**

(73) Patentinhaber : **CIBA-GEIGY AG**
**Klybeckstrasse 141**
**CH-4002 Basel (CH)**

(72) Erfinder : **Zahir, Sheik Abdul-Cader, Dr.**
**Elsternstrasse 12**
**CH-4104 Oberwil (CH)**
Erfinder : **Eldin, Sameer H., Dr.**
**Am Stausee 27/18**
**CH-4127 Birsfelden (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 038 300 B1

**Beschreibung**

Die Erfindung betrifft eine polymerisierbare und selbstvernetzbare Zusammensetzung olefinisch ungesättigter Monomerer und Acryl- oder Methacrylsäureestern von Allyl-, Methallyl- oder 1-Propenylsubstituierten zweikernigen Phenolen.

Die Vorpolymerisation von Vinylmonomeren hat technische Bedeutung zur Herstellung von flüssigen und härtbaren Polymerisatsirupen mit ausreichender Lagerstabilität und einem für die Weiterverarbeitung günstigen Viskositätsbereich. Diese Vorpolymerisate können als Giess- oder Imprägnierharze, Klebstoffe, Lacke und Bindemittel für körnige oder faserige Materialien Verwendung finden.

Zur Herstellung der Polymerisatsirupe muss die im allgemeinen radikalisch bei höherer Temperatur ausgelöste Polymerisation rasch abgebrochen werden, was durch schnelle Temperaturerniedrigung und/oder durch Zugabe eines Radikalfängers erreicht wird. Hierbei muss ein schneller Reaktionsabbruch erfolgen, da sonst zu hochmolekulare Produkte entstehen, die die Anforderungen an eine gute Verarbeitbarkeit nicht mehr erfüllen können.

Eine blosse Temperaturerniedrigung hat den Nachteil, dass nur kleine Ansätze schnell genug abgekühlt werden können, während der Zusatz von Radikalfängern die spätere Härtung und die Eigenschaften der Endprodukte nachteilig beeinflussen kann.

Die Härtung der Polymerisatsirupe erfolgt oft mit Hilfe von Vernetzungsmitteln, was den Nachteil hat, dass hiermit auch die Eigenschaften der Basissubstrate verändert werden.

Es ist daher äusserst wünschenswert, von polymerisierbaren Zusammensetzungen auszugehen, bei denen die Vorpolymerisation durch Abkühlen unterbrochen werden kann und hierbei Polymerisatsirupe mit günstigen Verarbeitungseigenschaften besonders hinsichtlich des Viskositätsbereiches erhalten werden, aus denen gehärtete Produkte mit guten Endeigenschaften herstellbar sind, wobei die Zugabe von Vernetzungsmitteln vermieden werden soll, um die Eigenschaften der Basissubstrate zu erhalten. Aufgabe vorliegender Erfindung ist es, solche polymerisierbare Zusammensetzungen bereitzustellen.

Gegenstand vorliegender Erfindung ist eine polymerisierbare und selbstvernetzbare Zusammensetzung olefinisch ungesättigter Monomerer und gegebenenfalls üblicher Zusätze, die gekennzeichnet ist durch einen Gehalt an, bezogen auf die Zusammensetzung,

a) 1 bis 99,9 Gew.-% mindestens eines durch polare Gruppen oder aromatische Kohlenwasserstoffgruppen substituierten Aethylen- oder Propylenmonomeren, und

b) 99 bis 0,1 Gew.-% eines Acrylat- oder Methacrylatesters der Formel I

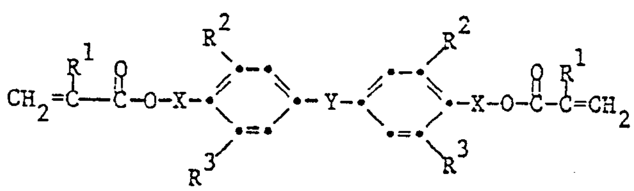

(I)

worin $R^1$ ein Wasserstoffatom oder Methyl, X eine Sauerstoff-Kohlenstoff-Bindung, $-CH_2-CH_2-O$, $-CH_2-CH(CH_3)-O-$ oder $-CH_2-CHOH-CH_2-O-$ und $R^2$ Allyl, Methallyl oder 1-Propenyl sind, $R^3$ ein Wasserstoffatom oder Methyl ist oder die Bedeutung von $R^2$ hat und Y für eine Kohlenstoff-Kohlenstoff-Bindung, Alkylen mit 1 bis 6 C-Atomen, Alkyliden mit 2 bis 6 C-Atomen, Cycloalkyliden mit 5 oder 6 Ringkohlenstoffatomen, ein Sauerstoffatom, ein Schwefelatom oder eine Gruppe der Formeln CO, SO oder $SO_2$ steht.

Ein weiterer Gegenstand der Erfindung sind die Verbindungen der Formel I.

In der erfindungsgemässen Zusammensetzung sind vorzugsweise 50 bis 99,9, besonders 75 bis 99,9 Gew.-% der Komponente a) und 0,1 bis 50, besonders 0,1 bis 25 Gew.-% der Komponente b) enthalten.

Komponente a) ist ein Aethylen- oder Propylenmonomer, das durch mindestens eine polare Gruppe oder eine aromatische Kohlenwasserstoffgruppe substituiert ist. Beispiele für polare Gruppen sind Halogene wie Fluor oder Chlor, Aethergruppen wie Alkyloxy, Phenyloxy oder Benzyloxy, Estergruppen wie Acyloxy oder Aroyloxy, oder Gruppen der Formel $-COOR^5$, worin $R^5$ ein Wasserstoffatom, Alkyl, Cycloalkyl, Aryl oder Aralkyl ist. Beispiele für aromatische Kohlenwasserstoffgruppen sind Phenyl, Toluyl, Chlorphenyl und Vinylphenyl. Im Falle der Halogensubstituenten können 1 bis 4 H-Atome im Monomer substituiert sein und im Falle der Cyanogruppe bis zu 2 H-Atome, die an das gleiche C-Atom gebunden sind. Die übrigen genannten Substituenten sind vorzugsweise nur einmal im Aethylen- oder Propylenmonomer enthalten.

Beispiele für die Monomeren der Komponente a) sind : Styrol, Divinylbenzol, Vinyltoluol, Chlorostyrol, α-Methylstyrol, Vinylchlorid, Vinylidenchlorid, Vinylidenfluorid, Tetrafluoräthylen, Trifluorchloräthylen Vinylfluorid, Vinylester, Vinyläther, Acrylnitril, Methacrylnitril, Vinylidencyanid und besonders Acryl- oder Methacrylsäureester mono- oder polyfunktioneller Alkohole.

Die monofunktionellen Alkohole enthalten insbesondere 1 bis 6 C-Atome und die polyfunktionellen Alkohole 2 bis 6 C-Atome.

Bevorzugte substituierte Aethylen- und Propylenmonomere für die Komponente a) sind Styrol, Divinylbenzol, Vinyltoluol, Chlorostyrol, Acrynitril, Methacrylnitril, Acryl- oder Methacrylsäure und besonders Acryl- oder Methacrylsäureester der Formel

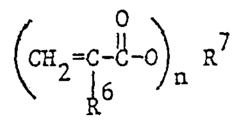

worin $R^6$ eine H-Atom oder Methyl ist, n ganze Zahlen von 1 bis 4 bedeutet und $R^7$ für einen n-wertigen aliphatischen, cycloaliphatischen oder aromatischen Kohlenwasserstoffrest steht.

Für $n = 1$ kann $R^7$ Alkyl oder Hydroxyalkyl mit bevorzugt 1 bis 12, besonders 1 bis 6 C-Atomen, Cyclohexyl, Phenyl oder Benzyl sein. Beispielsweise seien Hydroxyäthyl und 1,2-Hydroxypropyl genannt.

Für $n = 2$ kann $R^7$ Alkylen mit bevorzugt 2 bis 6 C-Atomen, Cyclohexylen, Phenylen oder ein Rest der Formel $-(C_mH_{2m}O-)_x$ sein, worin m die Zahl 2 oder 3 und x die Zahlen 2 bis 6 bedeuten. Letztgenannter Rest leitet sich von Poly(oxaalkylen) diolen wie Diäthylenglykol, Triäthylenglykol oder Dipropylenglykol ab.

Für $n = 3$ kann sich $R^7$ z. B. von Glycerin oder Trimethylolpropan und für $n = 4$ von Pentaerythrit ableiten.

Bevorzugt ist in den Estern der Formel I $R^2$ Allyl, $R^3$ ein Wasserstoffatom oder Allyl und Y methylen, Aethyliden oder 2,2-Propyliden.

Eine besonders bevorzugte Gruppe von Acryl- und Methacrylsäureestern sind solche der Formel I

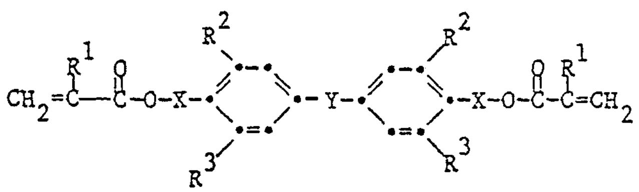 (I)

worin X, Y, $R^1$ und $R^2$ die für Formel I angegebene Bedeutung haben und $R^3$ ein Wasserstoffatom ist oder die Bedeutung von $R^2$ hat.

Bevorzugt sind solche Verbindungen der Formel I, worin X $CH_2-CHOH-CH_2-O$, $R^2$ Allyl oder Methallyl und Y Alkylen mit 1 bis 4 C-Atomen wie Methylen oder Aethylen sowie 1,1- oder 2,2-Propyliden, 1,1 oder 2,2-Butyliden, eine Kohlenstoff-Kohlenstoffbindung, Cyclohexyliden oder ein Sauerstoffatom bedeutet. Insbesondere ist Y Alkyliden mit 2-4 C-Atomen.

Beispiele für Acryl- und Methacrylsäureester der Formel I sind :

4,4'-Bisacryloyloxy-3,3'-bisallyl-diphenyl
4,4'-Bisacryloyloxy-3,3'-bismethallyl-diphenyläther
4,4'-Bis(1-acryloyloxy-2-methyläthoxy)-3,5,3',5'-tetraallyl-diphenyl-sulfid
4,4'-Bis(1-acryloyloxy-2-hydroxypropoxy)-3,3'-bis(1-propenyl)-diphenyl-sulfoxid
Bis-(4-acryloyloxy-3,5-dimethallylphenyl) carbonat
Bis-(4-acryloyloxy-3,5-diallylphenyl) methan
1,1-Bis-[4-acryloyloxy-3-(1-propenyl)phenyl] äthan
1,2-Bis-[4-acryloyloxuäthoxy)-3,5-dimethyallylphenyl] äthan
2,2-Bis-(4-acryloyloxy)-3-allyl-phenyl) propan
2,2-Bis(4-acryloyloxy-3-diallyl-phenyl) propan
2,2-Bis(4-acryloyloxyäthoxy-3-allyl-phenyl) propan
2,2-Bis[4-(2-acryloyloxy-2-methyläthoxy)-3-methallylphenyl] propan
2,2-Bis[4-(1-acryloyloxy-2-hydroxypropoxy)-3-allylphenyl] propan
2,2-Bis[4-(1-acryloyloxy-2-hydroxypropoxy)-3,5-diallylphenyl] propan
1,1-Bis[4-(1-acryloyloxy-2-hydroxypropoxy)-3-allylphenyl] cyclohexan
und deren analoge Methacrylsäureester.

Die Acryl- bzw. Methacrylsäureester der Komponente b) in der erfindungsgemässen Zusammensetzung können nach an sich bekannten Verfahren hergestellt werden.

Die als Ausgangsprodukte verwendeten allyl- und methallyl-substituierten mehrwertigen Phenole können durch Verätherung der entsprechenden unsubstituierten Phenole mit Allylchlorid bzw. Methallylchlorid und eine nachfolgende Claisenumlagerung erhalten werden. Sollen mehr Allyl- bzw. Methallylgruppen eingeführt werden, ist diese Reaktion entsprechend oft zu wiederholen. Hierbei werden überwiegend zunächst die Orthostellungen substituiert. Die entsprechenden (1-propenyl) substituierten

zweikernigen Phenole können mittels Isomerisierung der allylsubstituierten Phenole durch Einwirkung von Alkalien hergestellt werden. Die Herstellung dieser Ausgangsprodukte ist in der britischen Patentanmeldung 2 012 780 A beschrieben.

Die Acryl- bzw. Methacrylsäureester der substituierten zweikernigen Phenole der Komponente b) in der erfindungsgemässen Zusammensetzung können nach üblichen Veresterungsverfahren der Phenole mit Acrylsäure bzw. Methacrylsäure oder deren esterbildenden Derivate wie Säureester, Säureanhydride und besonders Säurehalogenide, in Gegenwart, oder ohne inertes Lösungsmittel (Kohlenwasserstoffe, Aether) bei Temperaturen von z. B. 0 bis 150 °C gegebenenfalls in Gegenwart eines Veresterungs- oder Umesterungskatalysators erhalten werden.

Zur Herstellung von Acryl- bzw. Methacrylestern der entsprechenden hydroxyalkylierten zweikernigen Phenole wird von den Hydroxyalkyläthern ausgegangen, die z. B. nach folgenden Methoden erhältlich sind. Zum einen können die allyl-, methallyl- oder 1-propenyl substituierten Phenole oder deren Alkalisalze mit Halogenalkoholen wie z. B. Chloräthanol, 1-Brom-2-hydroxypropan oder Epichlorhydrin umgesetzt werden. Dieses Herstellungsverfahren ist z. B. in Polymer Journal, Vol. 8, No. 6, Seiten 495-505 (1976) beschrieben. Zur Herstellung von alkylsubstituierten Hydroxyäthyläthern können auch die entsprechenden 1,2-Epoxide nach üblichen Verfahren an die substituierten Phenole angelagert werden. Beispiele für 1,2-Epoxide sind Aethylenoxid und 1,2-Propylenoxid.

Die entsprechenden Acryl- bzw. Methacrylsäureester der zuvor erwähnten Hydroxyalkyläther können wieder nach den üblichen Veresterungs- bzw. Umesterungsverfahren erhalten werden, die zuvor beschrieben sind. Bei den Dihydroxyalkyläthern wie z. B. 2,3-Dihydroxypropyläthern wird überwiegend nur die primäre Hydroxylgruppe verestert.

Die Acryl- und Methacrylsäureester der 2,3-Dihydroxypropyläther können auch nach anderen bekannten Verfahren erhalten werden. So können die entsprechend substituierten zweikernigen Phenole zunächst in die Glycidyläther überführt und diese dann mit Acryl- oder Methacrylsäure umgesetzt werden oder es können Acryl- oder Methacrylsäureglycidylester mit den substituierten zweikernigen Phenolen umgesetzt werden. Die Molverhältnisse der Reaktanden richten sich bei diesem Verfahren im wesentlichen nach der Anzahl der Glycidyläthergruppen bzw. phenolischen Hydroxylgruppen. Die Anlagerung von Epoxiden wird vorzugsweise ohne Lösungsmittel unter Zugabe eines Reaktionsbeschleunigers wie z. B. quaternären Ammoniumsalzen bei Temperaturen zwischen 50 und 200 °C durchgeführt.

Die Acryl- und Methacrylsäureester der Komponente b) sind farblose bis leichtbraune, flüssige, viskose oder harzartige Substanzen, die in üblichen organischen Lösungsmitteln löslich sind. Sie weisen eine gute Reaktivität auf und sind nach Zugabe von Polymerisationsinhibitoren lagerstabil. Sie können als Präpolymere oder direkt mit aktivierten Aethylen- oder Propylenmonomeren zu polymerisierbaren Zusammensetzungen vermischt werden, wobei eine stufenlose Mischbarkeit beobachtet wird.

Diese erfindungsgemässen Zusammensetzungen können nach den üblichen Methoden gut polymerisiert werden, da die bekannte Kettenabbrechende Wirkung von Allyl-, 1-Propenyl- bzw. Methallylgruppen (Mesomeriestabilisierung) überraschend die Reaktivität der Zusammensetzung praktisch nicht beeinflusst. Auf Grund der unterschiedlichen Reaktivität der polymerisierbaren Gruppen in der erfindungsgemässen Zusammensetzung ist auch eine stufenweise Härtung durch gleiche oder unterschiedliche Initiierung (thermisch oder photolytisch) möglich und es können ohne Zugabe von Vernetzern vernetzte Polymere hergestellt werden. Besonders vorteilhaft ist, dass durch eine Vorpolymerisation und anschliessenden Reaktionsabbruch durch einfaches Abkühlen Polymerisatsirupe in einem für die weitere Verarbeitung gewünschten Viskositätsbereich herstellbar sind. Die Eigenschaften der gehärteten Endprodukte sind im Vergleich zu den Eigenschaften der Basisharze nur wenig verändert.

Die Polymerisation der erfindungsgemässen Zusammensetzungen erfolgt nach den in der Technik üblichen Methoden durch radikalische oder ionische Initiierung.

Die radikalische Polymerisation kann durch thermische Anregung oder photochemische Anregung (Licht, $\gamma$-Strahlung, Elektronenstrahlung) erfolgen, was üblicherweise unter Zugabe von Radikalbildnern, z. B. anorganischen oder organischen Peroxiden oder Azoverbindungen, bzw. Photoinitiatoren wie z. B. organischen Peroxiden und Hydroperoxiden, $\alpha$-Halogenacetophenonen, Benzoin oder dessen Aether, Benzophenonen, Benzilacetalen, Anthrachinonen, Arsinen, Phosphinen oder Thioharnstoffen geschieht.

Die kationische Polymerisation wird mit anorganischen oder organischen Säuren oder Lewissäuren initiiert, z. B. Schwefelsäure, Perchlorsäure, Phosphorsäure, Sulfonsäuren, Bortrifluorid, Aluminiumtrichlorid, Titantetrachlorid, Zinntetrachlorid oder Antimonpentachlorid. Initiatoren für die anionische Polymerisation sind beispielsweise Alkalialkoholate, Alkalihydroxide oder Alkaliamide. Die Initiatoren werden im allgemeinen in Mengen von 0,01 bis 10, vorzugsweise 0,05 bis 5 Gew.-% zugegeben, bezogen auf die Zusammensetzung aus Komponente a) und Komponente b).

Die erfindungsgemässen Zusammensetzungen können übliche Zusätze wie z. B. Füllstoffe, Verarbeitungshilfsmittel, Stabilisatoren, Flammschutzmittel, Verstärkungsmittel oder Lichtschutzmittel enthalten.

Die erfindungsgemässen Zusammensetzungen eignen sich besonders in flüssiger Form, z. B. zur Oberflächenbeschichtung von Substraten wie Metallen (Eisen, Aluminium, Kupfer), Glas, Keramik, Papier oder Holz. Mittels Photopolymerisation der lichtempfindlichen Zusammensetzung durch ein Bildmaske und anschliessende Entwicklung können auf Trägern aufgebrachte Schichten auch zur Herstellung von Druckplatten oder gedrückten Schaltungen dienen. Verfahren hierzu sind z. B. in der britischen Patentschrift 1 495 746 beschrieben.

Eine weitere Verwendungsmöglichkeit ist der Einsatz als Klebstoffe zum Verbinden von gleichen oder verschiedenen Materialien wie Metalle, Keramik, Glas, Gummi, Kunststoffe, Papier und Holz. Die Härtung kann hierbei durch Erwärmung und bei Verwendung transparenter Materialien auch durch Einwirkung von Strahlung erfolgen.

Die erfindungsgemässe Zusammensetzung kann auch zur Herstellung von faserverstärkten Verbundstoffen dienen. Die Verstärkungsfasern aus. z. B. Glas, Kohlenstoff oder Asbest werden hierbei mit der flüssigen Zusammensetzung getränkt und anschliessend zur Härtzung bestrahlt und/oder erwärmt. Ferner eignen sich die Zusammensetzungen auch zur Herstellung von hohlen Gegenständen nach dem Filamentwickelverfahren und als Giess- und Imprägnierharze.

Die erfindungsgemässe Zusammensetzung wird zweckmässig vor der Applikation durch Mischen der Einzelkomponenten hergestellt und kann je nach Verwendungszweck gegebenenfalls mit üblichen Lösungsmitteln verdünnt und weiteren Zusätzen versehen werden. Je nach Anwendungszweck kann es vorteilhaft sein, die Zusammensetzungen zuerst zu Polymerisatsirupen vorzureagieren, um diese dann zu applizieren. Die Vorpolymerisation bis z. B. 100 °C und anschliessendes Abkühlen kann durch Photohärtung oder Thermohärtung erfolgen. Zweckmässig werden den Polymerisatsirupen vor der Weiterverarbeitung erneut Polymerisationsinitiatoren zugegeben.

Die thermische Aushärtung zu den Endprodukten wird im allgemeinen bei Temperaturen zwischen 50 bis 200 °C vorgenommen. Es kann aber auch stufenweise so vorgegangen werden, dass man in einer erster Stufe eine Photopolymerisation durchführt und dann eine Thermohärtung anschliesst. In diesem Fall werden vorteilhaft den Zusammensetzungen sowohl Photoinitiatoren als auch Radikalbildner oder ionische Katalysatoren zugesetzt.

Die ausgehärteten Endprodukte sind selbstvernetzte, harte Kunststoffe mit guten mechanischen Eigenschaften. Die Selbstvernetzung ist besonders vorteilhaft für die Herstellung von organischem Glas.

Die nachfolgenden Beispiele erläutern die Erfindung weiter. Die Prozentangaben sind hierin Gewichtsprozente.

A) Herstellung der Ausgangsprodukte

### Beispiel 1

Eine Mischung aus 103 g 2,2-Bis(3-allyl-4-hydroxyphenyl) propan und 95 g Glycidylmethacrylat, die 0,8 g 2,5-Di-tertiärbutyl-p-cresol und 0,4 g Tetramethylammoniumchlorid enthält, wird auf 110 °C erwärmt und dann 3,5 Stunden bei dieser Temperatur belassen, wonach der Epoxidgehalt vernachlässigbar klein war. Das Produkt ist im wesentlichen 2,2-Bis[3-allyl-4-(methacryloyloxy-2-hydroxypropoxy)-phenyl] propan.

### Beispiel 2

82 g 2,2-Bis(3-allyl-4-glycidyloxy-phenyl) propan mit einem Epoxidgehalt von 4,7 Aequivalenten/kg werden in Gegenwart von 0,35 g Tetramethylammoniumchlorid und 0,23 g 2,6-Di-tertiär-butyl-p-cresol auf 100 °C erwärmt. Darauf werden 34 g Methacrylsäure während 1 Stunde tropfenweise zugegeben und die Mischung weitere 3,5 Stunden bei 100 °C gerührt. Danach ist der Epoxidgehalt vernachlässigbar klein und der Rückstand entspricht der Verbindung gemäss Beispiel 1 und ist eine Flüssigkeit mit einer Viskosität von 108 Pas.

### Beispiel 3

Zu einer gerührten Mischung aus 68,5 g des Dinatriumsalzes von 2,2-Bis(3-allyl-4-hydroxyphenyl)-propan, 250 ml Toluol und 0,12 g 2,6-Di-tertiär-butyl-p-cresol wird tropfenweise während 1 Stunde 40,3 g Methacryloylchlorid zugegeben, wobei die Temperatur auf 45 °C gehalten wird. Nach weiteren 2,5 Stunden Rühren wird filtriert und vom Filtrat das Lösungsmittel durch Vakuumdestillation entfernt. Der Rückstand ist im wesentlichen 2,2-Bis[3-allyl-4-(methacryloyloxy)-phenyl] propan, eine nahezu farblose Flüssigkeit mit einer Viskosität von 3,6 Pas.

### Beispiel 4

Eine Mischung aus 194 g 2,2-Bis(3,5-diallyl-4-hydroxyphenyl) propan, 154 g Glycidylmethacrylat, 0,7 g Tetramethylammoniumchlorid und 2,8 g 2,6-Di-tertiär-butyl-p-cresol wird während einer Stunde auf 95 °C erhitzt und weitere 3,5 Stunden bei dieser Temperatur gerührt. Das Reaktionsprodukt ist im wesentlichen 2,2-Bis[3,5-diallyl-4-(3-methacryloxy-2-hydroxypropoxy) phenyl] propan.

### Beispiel 5

Eine Mischung aus 49,2 g 2,2-Bis[3-(1-propenyl)-4-(methacryloyloxy)] propan, 0,1 g Tetramethylammoniumchlorid und 0,15 g Hydrochinon wird auf 80 °C erwärmt, dann 20,4 g Methacrylsäure während

1 Stunde zugetropft und danach 8 Stunden bei 80 °C weitergerührt. Das Reaktionsprodukt ist 2,2-Bis[3-(1-propenyl)-4-(methacryloyloxy-2-hydroxypropoxy) phenyl] propan.

Beispiele 6-9

Eine Mischung aus dem Ausgangsprodukt, Benzyltriäthylammoniumchlorid als Katalysator und einem Inhibitor wird auf 110 °C erwärmt und dann Acrylsäure bzw. Methacrylsäure zugetropft. Man lässt danach solange reagieren, bis die Mischung einen Säurewert von höchstens 0,1 Val/kg erreicht. Die weiteren Angaben können nachfolgender Tabelle I entnommen werden.

(Siehe Tabelle I Seite 7 f.)

Tabelle I

| Beispiel No. | Menge Ausgangsprodukt (g) | | Menge Acrylsäure (g) | Menge Methacrylsäure (g) | Menge Katalysator (g) | Menge Initiator (g) | Reaktionsprodukt | | |
|---|---|---|---|---|---|---|---|---|---|
| | Produkt | Epoxidgehalt (Val/Kg) | | | | | Epoxidgehalt (Val/Kg) | Carboxylgehalt (Val/Kg) | $\eta$ 25°C (cP) |
| 6 | 800 g 0,0'-Diallyl-bis-phenol-A-diglycidyläther | 4,41 | - | 289 | 1,53 | 1,09 HQ[3)]<br>1,09 PH | 0,29 | 0,1 | Harz |
| 7 | 800 g 0,0'-Diallyl-bis-phenol-A-diglycidyläther | 4,41 | 242 | - | 1,52 | 1,04 HQ<br>1,04 PH | 0,32 | 0,09 | Harz |
| 8 | 800 g 0,0'-Di(1-Propenyl)-bis-phenol-A-diglycidyläther | 4,45 | - | 291 | 1,54 | 1,09 HQ<br>1,09 PH | 0,24 | 0,05 | Harz |
| 9 | 800 g 0,0'-Di(1-Propenyl)-bis-phenol-A-diclycidyläther | 4,45 | 244 | - | 1,54 | 1,04 HQ<br>1,04 PH | 0,30 | 0,08 | Harz |

1) TPBK = Di-tertiär-Butyl-p-cresol
2) PH = Phenothiazin
3) HQ = Hydrochinon

B) Applikationsbeispiele

Beispiel 10

220 g einer der nachfolgenden Verbindungen werden kurzzeitig auf 60-70 °C erwärmt, mit 180 g Styrol verrührt, auf Raumtemperatur abgekühlt und zur Herstellung von Formkörpern abgefüllt (die Mischung enthält je 1 000 ppm Hydrochinon und Phenothiazin als Inhibitoren) :

2,2-Bis[3-allyl-4-(1-acryloyloxy-2-hydroxypropoxy) phenyl] propan (E)
2,2-Bis[3-allyl-4-(1-methacryloyloxy-2-hydroxypropoxy) phenyl] propan (F)
2,2-Bis[3-(1-propenyl)-4-(1-acryloyloxy-2-hydroxypropoxy) phenyl] propan (G)
2,2-Bis[3-(1-propenyl)-4-(1-methacryloyloxy-2-hydroxyporpoxy) phenyl] propan (H).

Die Eigenschaften der Mischung sind in Tabelle V angegeben. Als Katalysatorsystem I werden der Mischung 2,0 Teile Benzoylperoxid (50 %-ige Lösung in Dibutylphthalat) und 0,2 Teile Dimethylanilin (10 %-ige Lösung in Dibutylphthalat) und 0,2 Teile Dimethylanilin (10 %-ige Lösung in Dibutylphthalat) und als Katalysatorsystem II 2,0 Teile in Methyläthylketonperoxid (50 %-ige Lösung in Dibutylphthalat) 3,0 Teile Kobaltoctoat (1 %-ige Lösung in Dibutylphthalat) und 0,5 Teile Dimethylanilin (10 %-ige Lösung in Dibutylphthalat) zugegeben.

Die Mischung mit dem Katalysatorsystem II wird in Formen gefüllt und 24 Stunden bei Raumtemperatur und 8 Stunden bei 100 °C gehärtet und an den Formkörpern die in Tabelle VI angegebenen Eigenschaften bestimmt.

Tabelle V

| Eigenschaft \ Mischung | Styrol mit E | Styrol mit F | Styrol mit G | Styrol mit H |
|---|---|---|---|---|
| Lagerstabilität (Tage bei 60°C) | >15 | >15 | >15 | >12 |
| Viskosität 25°C mPas | 13 | 12 | 22 | 20 |
| Viskosität 40°C mPas | 7 | 7 | 11 | 9 |
| Gelierzeit bei 80°C DIN 16945 Katalysatorsystem I | 10'30" | 14'15" | 5'10" | 9'20" |
| Gelierzeit bei 25°C DIN 16945 (Min) Katalysatorsystem II | 51 | 101 | 19 | 66 |

Tabelle VI

Eigenschaften der gehärteten Produkte

| Eigenschaft \ Mischung | Styrol mit E | Styrol mit F | Styrol mit G | Styrol mit H |
|---|---|---|---|---|
| Glasumwandlungs-temperatur (°C) | 99 | 109 | 125 | 128,5 |

(Fortsetzung)

| Eigenschaft / Mischung | Styrol mit E | Styrol mit F | Styrol mit G | Styrol mit H |
|---|---|---|---|---|
| Biegefestigkeit $N/mm^2$ | 90,0 | 97,2 | 84,1 | 81,7 |
| 95%-Bereich | 85,2-94,5 | 91,7-102,7 | 74,7-93,5 | 74,1-89,3 |
| Durchbiegung mm | 7,6 | 5,8 | 4,2 | 3,6 |
| 95%-Bereich | 6,4-8,8 | 5,0-6,6 | 3,6-4,8 | 3,1-4,1 |
| Schlagbiegefestigkeit $kJ/m^2$ | 9,5 | 7,0 | 5,8 | 6,6 |
| 95%-Bereich | 8,0-11,5 | 4,7-9,3 | 4,2-7,4 | 5,6-7,6 |

**Patentansprüche**

1. Polymerisierbare und selbstvernetzbare Zusammensetzung olefinisch ungesättigter Monomerer die gekennzeichnet ist durch einen Gehalt an, bezogen auf die Zusammensetzung,

a) 1 bis 99,9 Gew.-% mindestens eines durch polare Gruppen oder aromatische Kohlenwasserstoffgruppen substituierten Aethylen- oder Propylenmonomeren, und

b) 99 bis 0,1 Gew.-% eines Acrylat- oder Methacrylatesters der Formel I

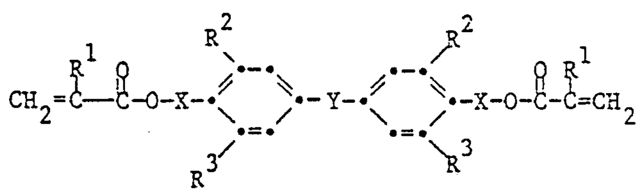

(I)

worin $R^1$ ein Wasserstoffatom oder Methyl, X eine Sauerstoff-Kohlenstoff-Bindung, $-CH_2-CH_2-O-$, $-CH_2-\underset{CH_3}{\underset{|}{CH}}-O-$ oder $-CH_2-CHOH-CH_2-O-$ und $R^2$ Allyl, Methallyl oder 1-Propenyl sind, $R^3$ ein Wasserstoffatom oder Methyl ist oder die Bedeutung von $R^2$ hat und Y für eine Kohlenstoff-Kohlenstoff-Bindung, Alkylen mit 1 bis 6 C-Atomen, Alkyliden mit 2 bis 6 C-Atomen, Cycloalkyliden mit 5 oder 6 Ringkohlenstoffatomen, ein Sauerstoffatom, ein Schwefelatom oder eine Gruppe der Formeln CO, SO oder $SO_2$ steht.

2. Zusammensetzung gemäss Anspruch 1, dadurch gekennzeichnet, dass sie 50 bis 99,9, vorzugsweise 75 bis 99,9 Gew.-% der Komponente a) und 0,1 bis 50, vorzugsweise 0,1 bis 215 Gew.-% der Komponente b) enthält.

3. Zusammensetzung gemäss Anspruch 1, dadurch gekennzeichnet, dass Komponente a) aus der Gruppe Styrol, Divinylbenzol, Vinyltoluol, Chlorostyrol, α-Methylstyrol, Vinylchlorid, Vinylidenchlorid, Vinylidenfluorid, Tetrafluoräthylen, Trifluorchloräthylen, Vinylfluorid, Vinylester, Vinyläther, Acrylnitril, Methacrylnitril, Vinylidencyanid und besonders Acryl- oder Methacrylsäureestern mono- oder polyfunktioneller Alkohole ausgewählt ist.

4. Zusammensetzung gemäss Anspruch 3, dadurch gekennzeichnet, dass die monofunktionellen Alkohole, welche den Acryl- oder Methacrylsäureestern zugrunde liegen, 1 bis 6 C-Atome und die polyfunktionellen Alkohole 2 bis 6 C-Atome aufweisen.

5. Zusammensetzung gemäss Anspruch 1, dadurch gekennzeichnet, dass X, Y, $R^1$ und $R^2$ in Formel I die angegebene Bedeutung haben und $R^3$ ein Wasserstoffatom ist oder die Bedeutung von $R^2$ hat.

6. Zusammensetzung gemäss Anspruch 1, dadurch gekennzeichnet, dass in Formel I $R^2$ für Allyl, $R^3$ für ein Wasserstoffatom oder Allyl und Y für Methylen, Aethyliden oder 2,2-Propyliden stehen.

7. Acryl- und Methacrylsäureester der Formel I

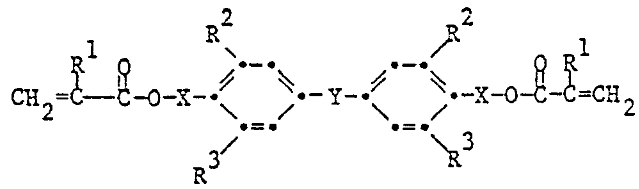
(I)

worin $R^1$ ein Wasserstoffatom oder Methyl, X eine Sauerstoff-Kohlenstoff-Bindung, $-CH_2-CH_2-O-$, $-CH_2-CH(CH_3)-O-$ oder $-CH_2-CHOH-CH_2-O-$ und $R^2$ Allyl, Methallyl oder 1-Propenyl sind, $R^3$ ein Wasserstoffatom oder Methyl ist oder die Bedeutung von $R^2$ hat und Y für eine Kohlenstoff-Bindung, Alkylen mit 1 bis 6 C-Atomen, Alkyliden mit 2 bis 6 C-Atomen, Cycloalkyliden mit 5 oder 6 Ringkohlenstoffatomen, ein Sauerstoffatom, ein Schwefelatom oder eine Gruppe der Formeln CO, SO oder $SO_2$ steht.

## Claims

1. A polymerisable and self-crosslinkable composition of monomers having olefinic unsaturation and containing

a) 1 to 99.9 % by weight of at least one ethylene or propylene monomer which is substituted by polar groups or aromatic hydrocarbon groups, and

b) 99 to 0.1 % by weight of an acrylate or methacrylate of the formula I

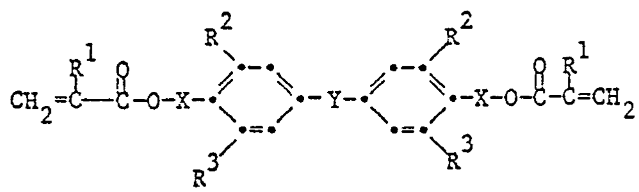
(I)

wherein $R^1$ is a hydrogen atom or methyl, X is an oxygen-carbon bond, $CH_2-CH_2-O$, $CH_2-CH(CH_3)-O$ or $CH_2-CHOH-CH_2-O$, and $R^2$ is allyl, methallyl or 1-propenyl, $R^3$ is a hydrogen atom or methyl or has the meaning of $R^2$, and Y is a carbon-carbon bond, alkylene of 1 to 6 carbon atoms, alkylidene of 2 to 6 carbon atoms, cycloalkylidene containing 5 or 6 ring carbon atoms, an oxygen atom, a sulfur atom or a group of the formula CO, SO or $SO_2$.

2. A composition according to claim 1 which contains 50 to 99.9 % by weight, preferably 75 to 99.9 % by weight, of component a), and 0.1 to 50 % by weight, preferably 0.1 to 25 % by weight, of component b).

3. A composition according to claim 1, wherein component a) is selected from the group consisting of styrene, divinylbenzene, vinyl toluene, chlorostyrene, $\alpha$-methylstyrene, vinyl chloride, vinylidene chloride, vinylidene fluoride, tetrafluoroethylene, trifluorochloroethylene, vinyl fluoride, vinyl esters, vinyl ethers, acrylonitrile, methacrylonitrile, vinylidene cyanide and, in particular, acrylates or methacrylates of mono- or polyfunctional alcohols.

4. A composition according to claim 3, wherein the monofunctional alcohols from which the acrylates or methacrylates are derived contain 1 to 6 carbon atoms, and the polyfunctional alcohols contain 2 to 6 carbon atoms.

5. A composition according to claim 1, wherein X, Y, $R^1$ and $R^2$ are as defined for formula I and $R^3$ is a hydrogen atom or has the meaning of $R^2$.

6. A composition according to claim 1, wherein in formula I $R^2$ is allyl, $R^3$ is a hydrogen atom or allyl and Y is methylene, ethylidene or 2,2-propylidene.

7. An acrylate or methacrylate of the formula I

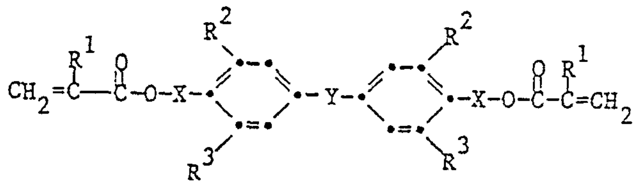

(I)

wherein $R^1$ is a hydrogen atom or methyl, X is an oxygen-carbon bond, $CH_2-CH_2-O$, $CH_2-\underset{CH_3}{CH}-O$ or $CH_2-CHOH-CH_2-O$, $R^2$ is allyl, methallyl or 1-propenyl, $R^3$ is a hydrogen atom or methyl or has the meaning of $R^2$, and Y is a carbon-carbon bond, alkylene of 1 to 6 carbon atoms, alkylidene of 2 to 6 carbon atoms, cycloalkylidene containing 5 or 6 ring carbon atoms, an oxygen or a sulfur atom or a group of the formula CO, SO or $SO_2$.

**Revendications**

1. Composition polymérisable et autoréticulable à base de monomères éthyléniques, composition caractérisée en ce qu'elle contient, par rapport à elle-même :

a) de 1 à 99,9 % en poids d'au moins un monomère éthylénique ou propylénique porteur de radicaux polaires ou de radicaux hydrocarbonés aromatiques, et

b) de 99 à 0,1 % en poids d'un ester acrylique ou méthacrylique répondant à la formule I :

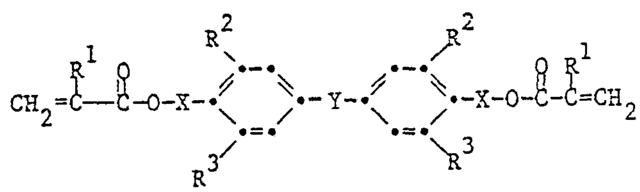

(I)

dans laquelle $R^1$ représente un atome d'hydrogène ou un radical méthyle, X représente une liaison oxygène-carbone ou un radical $-CH_2-CH_2-O-$, $-CH_2-\underset{CH_3}{CH}-O-$ ou $-CH_2-CHOH-CH_2-O-$, $R^2$ représente un radical allyle, méthallyle ou propène-1 yle, $R^3$ représente un atome d'hydrogène ou un radical méthyle ou encore a l'une des significations de $R^2$, et Y représente une liaison carbone-carbone, un alkylène contenant de 1 à 6 atomes de carbone, un alkylidène contenant de 2 à 6 atomes de carbone, un cycloalkylidène contenant 5 ou 6 atomes de carbone dans son cycle, un atome d'oxygène, un atome de soufre ou un radical CO, SO ou $SO_2$.

2. Composition selon la revendication 1, caractérisée en ce qu'elle contient de 50 à 99,9 % en poids, de préférence de 75 à 99,9 % en poids, de la composante a) et de 0,1 à 50 % en poids, de préférence de 0,1 à 25 % en poids, de la composante b).

3. Composition selon la revendication 1, caractérisée en ce que la composante a) est prise dans l'ensemble constitué par le styrène, le divinylbenzène, le vinyltoluène, le chlorostyrène, l'α-méthylstyrène, le chlorure de vinyle, le chlorure de vinylidène, le fluorure de vinylidène, le tétrafluoréthylène, le trifluorochloréthylène, le fluorure de vinyle, des esters vinyliques, des éthers vinyliques, l'acrylonitrile, le méthacrylonitrile, le cyanure de vinylidène et, surtout, des esters acryliques ou méthacryliques de mono-alcools ou de polyols.

4. Composition selon la revendication 3, caractérisée en ce que les mono-alcools dont dérivent les esters acryliques ou méthacryliques contiennent de 1 à 6 atomes de carbone, et les polyols de 2 à 6 atomes de carbone.

5. Composition selon la revendication 1, caractérisée en ce que, dans la formule I, les symboles X, Y, $R^1$ et $R^2$ ont les significations qui ont été données et $R^3$ représente un atome d'hydrogène ou a la signification de $R^2$.

6. Composition selon la revendication 1, caractérisée en ce que, dans la formule I, $R^2$ représente un allyle, $R^3$ un atome d'hydrogène ou un allyle et Y un radical méthylène, éthylidène ou propylidène-2,2.

7. Esters acryliques et méthacryliques répondant à la formule I :

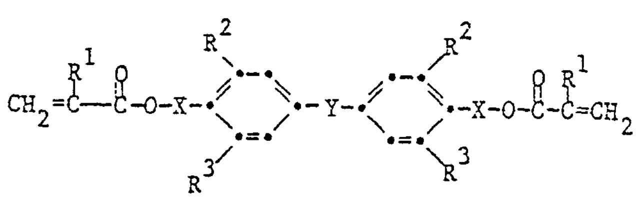

(I)

dans laquelle $R^1$ représente un atome d'hydrogène ou un radical méthyle, X représente une liaison oxygène-carbone ou un radical $—CH_2—CH_2—O—$, $—CH_2—\underset{\displaystyle CH_3}{\underset{|}{CH_2}}—O—$ ou $—CH_2—CHOH—CH_2—O—$, $R^2$ représente un radical allyle, méthallyle ou propène-1 yle, $R^3$ représente un atome d'hydrogène ou un radical méthyle ou encore a l'une des significations de $R^2$, et Y représente une liaison carbone-carbone, un alkylène contenant de 1 à 6 atomes de carbone, un alkylidène contenant de 2 à 6 atomes de carbone, un cycloalkylidène contenant 5 ou 6 atomes de carbone dans son cycle, un atome d'oxygène, un atome de soufre ou un radical CO, SO ou $SO_2$.